# EUROPÄISCHE PATENTSCHRIFT

(11) **EP 2 645 392 B1**
(45) Veröffentlichungstag und Bekanntmachung des Hinweises auf die Patenterteilung: **05.10.2016**
(21) Anmeldenummer: 12161674.2
(22) Anmeldetag: 28.03.2012
(51) Int. Cl.: H01H 13/705, H01H 13/7057, H01H 9/02

(54) **Tastenmodul, insbesondere für modulare Systeme der Gebäudeelektroinstallation und Türkommunikation**
Button module, in particular for modular systems of electroinstallation technology for buildings and door communication
Module à touches, en particulier pour systèmes modulaires de l'installation électrique du bâtiment et de la communication de porte

(43) Veröffentlichungstag der Anmeldung: 02.10.2013
(73) Patentinhaber: Gira Giersiepen GmbH & Co. Kg, 42477 Radevormwald (DE)
(72) Erfinder: Schieffer, Klaus, 51375 Leverkusen (DE)
(74) Vertreter: Patent- und Rechtsanwälte Dr. Solf & Zapf

(56) Entgegenhaltungen:
- EP-A1- 1 791 148
- DE-B3-102007 045 866
- DE-U1- 9 112 653
- DE-U1-202006 006 215

## Beschreibung

Die vorliegende Erfindung betrifft ein Tastenmodul, insbesondere für modulare Systeme der Gebäudeelektroinstallation und Türkommunikation, umfassend ein Modulunterteil und ein mit dem Modulunterteil durch Montage in einer Aufsatzrichtung lösbar verbundenes Moduloberteil, wobei in dem Moduloberteil mindestens eine durch Druck in einer Funktionsrichtung betätigbare Taste montiert ist. Das Modulunterteil dient dabei insbesondere zum Befestigen des Tastenmoduls an einem Systemträger.

Ein Beispiel von Tastenmodul mit lösbar verbundenen Unterund Oberteil wird in der DE-B-102007045866 offenbart. Bei bekannten Tasten- und auch anderen Systemmodulen der Gebäudeelektroinstallation und Türkommunikation, wie elektrischen Schaltern, Klingeltastern, Lautsprecher- oder Kameramodulen, sind das Modulunterteil und das Moduloberteil in der Regel derart ausgebildet, dass das Modulunterteil an das Oberteil angepasst ist, welches seinerseits eine zur Erfüllung einer bestimmten Funktion jeweils spezifische Ausbildung aufweist. Im Hinblick auf die Moduloberteile von Tastenmodulen mit insbesondere Ruf- oder Klingeltasten sind Tasten in sehr unterschiedlichen Formen marktüblich. So gibt es gravierbare Tasten aus Metall, Tasten mit Metallrahmen und mit transparenten Namensschildern sowie Ganzkunststofftasten. Daher sind sowohl die verwendeten modularen Ober-, als auch die Unterteile nicht einheitlich.

Zudem handelt es sich bekanntermaßen oft um Systemmodule, bei denen ein äußerer Abdeckrahmen verwendet wird, der in Abhängigkeit von der Anzahl der Module in seiner Größe variiert. Auch ist es bekannt, insbesondere metallische Oberflächen für modulare Systeme mit Tastenmodulen der eingangs genannten Art, die in der Regel zusammen mit anderen Modulen montiert sind, zu bilden, indem die Module durch einstückige, vorzugsweise metallische Frontplatten abgedeckt werden. Eine weitere bekannte Möglichkeit besteht schließlich darin, die einzelnen Module durch Öffnungen der Frontplatten hindurchzustecken, wobei nach der Montage die Modulrahmen auf der einstückigen Frontplatte aufliegen.

Zwar bietet die Vielzahl der bekannten Tastenausführungen vorteilhafterweise eine hohe Individualisierungsmöglichkeit der Oberfläche durch eine spezielle Designgestaltung, jedoch ist diese dann oftmals nicht mit dem modularen Gesamtaufbau kompatibel, die Tastenmodule sind schwer zu montieren, bieten ein ästhetisch wenig ansprechendes Bild, indem sie über den Abdeckrahmen vorstehen, und/oder sie sind im Hinblick auf die Bedienbarkeit der Tasten ergonomisch nachteilhaft.

Der vorliegenden Erfindung liegt die Aufgabe zugrunde, ein Tastenmodul der eingangs genannten Art zu schaffen, welches sich bei einer kompakten und wenig flächenintensiven Modulbauweise durch eine aufwandsarme Montagefähigkeit und ergonomisch optimale Bedienbarkeit auszeichnet, und für das bei einer hohen Individualisierungsmöglichkeit der Tasten eine Trennbarkeit von Modulunterteil und Moduloberteil derart gegeben ist, dass einheitliche Modulunterteile verwendbar sind.

Erfindungsgemäß wird dies durch die Merkmale vom Anspruch 1 erreicht.

Vorteilhafterweise ist in dem erfindungsgemäßen Tastenmodul das Modulunterteil, welches das konstruktive Teil zur Ausführung der Gesamtmontagefunktion des Tastenmoduls repräsentiert, von den Tasten, welche die konstruktiven Teile zur Ausführung der Design- und Bedienfunktionen repräsentieren, getrennt, so dass bei leichter Montagefähigkeit unter Verwendung gleichartiger Modulunterteile eine unter funktionellen, ergonomischen und ästhetischen Aspekten weit gefächerte Oberflächenvielfalt gestaltbar ist.

Modulunterteile und Tastenträger des erfindungsgemäßen Tastenmoduls sind vorteilhafterweise jeweils als gleichartig ausgebildete Vormontageeinheiten montierbar. Dabei können alle gewünschten Tasten dann später separat senkrecht zur Erstreckungsebene des Modulunterteils zur Montage in den gemeinsamen, schon mit dem Modulunterteil verbundenen Tastenträger eingesetzt bzw. zur Demontage oder auch nur für einen Austausch gegen eine andere Taste separat wieder entnommen werden.

Andererseits kann aber auch eine übermäßige Vielfalt von Tastenausführungen, z. B. mit unterschiedlicher Ruftastenoptik als Beschriftungsträger ausgebildete Tasten, optimalerweise auf eine gemeinsame Basis reduziert, d. h. in einem gewünschten Maß unifiziert werden, womit eine Verringerung der Teileanzahl und damit eine Kostenreduzierung verbunden sind. So können die Tasten zu diesem Zweck ein weitgehend einheitliches, plattenförmiges Basisteil aufweisen, an dem Verbindungsmittel für den Tastenträger ausgebildet oder montierbar sind, welche die lösbare Montage in der Tastenmontagerichtung senkrecht zur Erstreckungsebene des Tastenträgers und des Modulunterteils auf einfache Weise ermöglichen. In bevorzugter Ausführung kann es sich bei solchen Verbindungsmitteln um an das Basisteil angeformte Rastmittel, wie Rastzapfen, oder um ferromagnetische

Befestigungsmittel, wie Stahlniete, handeln, so dass die Tasten über eine Rastverbindung oder über eine Magnetverbindung mit dem Tastenträger verbunden werden können. Im Tastenträger können sich dabei die komplementären Gegenrastmittel oder Permanentmagnete befinden, welche ohne nachteilhafte Wechselwirkung mit den piezoelektrischen Schaltelementen eingesetzt werden können.

Aufgrund dessen, dass die elektronische Schaltung auf dem Schaltungsträger die piezoelektrischen Elemente zur Auslösung des Schaltvorgangs enthält, sind die Tasten durch einen Bedienungsdruck in der Funktionsrichtung senkrecht zur Grundrissebene des Moduls betätigbar, so dass vorteilhafterweise Tastenkippbewegungen vermieden werden können. Unter diesem Aspekt ist es im Sinne einer symmetrischen Kraftübertragung durch die Tasten auch vorteilhaft, wenn jeder Taste zumindest zwei piezoelektrische Elemente zugeordnet sind, die sich im Montagezustand in einem Bereich unter den Tastenenden befinden. Weil zur Bedienung der Tasten keinerlei seitliche Bewegungen ausgeführt werden, ergibt es sich, dass ein Spalt zwischen den Tasten und/oder den Modulen nur eine sehr geringe Spaltweite, d. h. eine Spaltweite im Bereich zwischen 0,5 mm und 1,5 mm, bevorzugt im Bereich zwischen 0,8 mm und 1,2 mm aufweisen kann. Auch kann erfindungsgemäß mit Vorteil bei der Montage eine in der Draufsicht flächenbündige Anlage sowohl der vorhandenen einzelnen Tasten eines Moduls, als auch der Tastenmodule aneinander und/oder an weiteren modularen Funktionseinheiten - eine sogenannte "Rahmenlosigkeit" - erreicht werden.

Des Weiteren besteht bei dem erfindungsgemäßen Tastenmodul die vorteilhafte Möglichkeit, die Seitenbegrenzungskonturen der Tasten und des gesamten Moduls rechteckig, die des Letzteren insbesondere quadratisch, auszuführen. So kann insbesondere das Modulunterteil, welches zur Befestigung an einem Systemträger dient, in seinem Grundkörper eine quaderförmige Gestalt mit einer solchen Außenkontur aufweisen.

Für die Seitenbegrenzungskonturen kann dabei ein Raster mit aus quadratischen Einheitsflächen gebildeten Teilflächen vorgegeben sein, deren jeweilige Grundseite ein Rastermaß aufweist, nach welchem die jeweilige Länge und/oder die jeweilige Breite der Kontur und/oder bei Vorhandensein von zwei oder mehr Funktionseinheiten in einem modularen Montagesystem der jeweilige Mittenabstand zwischen den erfindungsgemäßen Tastenmodulen und/oder den Tasten untereinander oder zwischen Tastenmodulen und anderen Funktionseinheiten als ganzzahliges Produkt des Rastermaßes dimensioniert sind. Vorzugsweise kann dabei die Seitenkantenlänge jeder Teilfläche einem modulspezifischen Rastermaß entsprechen, das 17,75 mm beträgt.

Hierbei kann bei Verwendung des erfindungsgemäßen Tastenmoduls in einem modularen System der Gebäudeelektroinstallation und Türkommunikation vorteilhafterweise unter Verzicht auf eine zusätzliche Frontplatte eine gesamte Sichtfläche oder zumindest ein überwiegender Anteil der Sichtfläche des erfindungsgemäßen modularen Montagesystems aus Teiloberflächen zusammengesetzt sein, die ausschließlich aus den jeweiligen Oberflächen der erfindungsgemäßen Tastenmodule und anderen modularen Funktionseinheiten bestehen, die flächenbündig aneinander anliegen. Vier in einem Tastenmodul nebeneinander liegende Tasten können insbesondere einschließlich der zwischen ihnen liegenden Spalte eine Gesamtbreite aufweisen, die dem sechsfachen Rastermaß entspricht, welches im vorstehend genannten bevorzugten Fall 106,5 mm beträgt.

Mit der Erfindung ist vorteilhafterweise eine hohe Individualisierungsmöglichkeit der Oberfläche gegeben. So kann eine Oberflächensegmentierung vorgenommen werden, bei der jede Teiloberfläche bedarfsweise eine unterschiedliche oder einheitlich mit anderen Teiloberflächen ausgeführte Gestaltung aufweist. Die Tasten können insbesondere als Beschriftungsträger ausgebildet sein. Die Tastenmodule können insbesondere durch Edelstahlauflagen, eloxierte Aluminiumplatten oder den Einsatz von Kunststoff, wobei zur Tastenkennzeichnung auch selbstklebende Beschriftungsfolien eingesetzt werden können, individuell gestaltet werden.

Die piezoelektrischen Elemente, bei denen es sich bevorzugt jeweils um eine piezoelektrische Folie oder um eine piezoelektrische Druckschicht handeln kann, können sehr dünn - d. h. mit einer Dicke von weniger als 0,5 mm, bevorzugt von weniger als 100 µm - ausgeführt werden und ermöglichen daher eine sehr kompakte Bauweise. So ist es mit Vorteil möglich, zu erreichen, dass die Tasten nicht nur eine kongruent ausgebildete Außenkontur, sondern bevorzugt - selbst unter Berücksichtigung dessen, dass die Tasten zur Aufnahme eines Namensschildes taschenartig ausgebildet sein können - auch eine gleiche Tastenhöhe aufweisen.

Außerdem gewährleisten die mit dem Schaltungsträger in das Modulunterteil eingebetteten und vom Tastenträger abgedeckten piezoelektrischen Elemente - und dies ist ein weiterer Vorteil - auch einen erhöhten Schutz vor Vandalismus, da sie - im Gegensatz zu anderen, bekannten, größeren Schaltelementen - insbesondere an dieser Stelle kaum zerstörbar sind. Der Vandalismus wird somit auf die Möglichkeit eines - im schlimmsten Fall - unberechtigten Klingelns reduziert.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll im Folgenden die Erfindung näher erläutert werden. Dabei zeigen:
- Fig. 1: in perspektivischer Explosionsdarstellung in einer Ansicht von der Rückseite her, eine erste Ausführung eines erfindungsgemäßen Tastenmoduls,
- Fig. 2: ebenfalls in perspektivischer Explosionsdarstellung, aber in einer Ansicht von der Vorderseite her, eine zweite Ausführung eines erfindungsgemäßen Tastenmoduls,
- Fig. 3: einen Querschnitt durch die in Fig. 1 dargestellte Ausführung eines erfindungsgemäßen Tastenmoduls im Montagezustand,
- Fig. 4: in einer teilgeschnittenen perspektivischen Ansicht von unten eine weitere Ausführung eines erfindungsgemäßen Tastenmoduls mit einer montierten und einer nicht montierten Taste,
- Fig. 5: in der Draufsicht, eine Darstellung eines vormontierten Modulunterteils eines erfindungsgemäßen Tastenmoduls,
- Fig. 6: in perspektivischer Explosionsdarstellung in einer Ansicht von der Rückseite her, eine weitere Ausführung eines erfindungsgemäßen Tastenmoduls,
- Fig. 7a bis 7d: jeweils in der Draufsicht auf die jeweilige Sichtfläche vier verschiedene Ausführungsformen eines erfindungsgemäßen Tastenmoduls,
- Fig. 8: in perspektivischer Explosionsdarstellung in einer Ansicht von der Rückseite her, eine erste Tastenausführung eines erfindungsgemäßen Tastenmoduls,
- Fig. 9: in einer Darstellung wie in Fig. 8, eine zweite Tastenausführung eines erfindungsgemäßen Tastenmoduls,
- Fig. 10: in perspektivischer Explosionsdarstellung in einer Ansicht auf die Vorderseite, eine dritte Tastenausführung eines erfindungsgemäßen Tastenmoduls,
- Fig. 11: in einer Darstellung wie in Fig. 10, eine vierte Tastenausführung eines erfindungsgemäßen Tastenmoduls,
- Fig. 12: in perspektivischer Ansicht von unten, eine Ausführung einer Taste eines erfindungsgemäßen Tastenmoduls mit zu den Ausführungen in Fig. 1 bis 4 alternativer Befestigungsart,
- Fig. 13: einen Längsschnitt durch ein erfindungsgemäßes Tastenmodul im Montagezustand mit einer Tastenausführung gemäß Fig. 12,
- Fig. 14 in: perspektivischer Darstellung, gesehen von einer Wandseite aus, eine Ausführung eines erfindungsgemäßen Tastenmoduls, montiert in einem Träger eines modularen Montagesystems.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den Figuren der Zeichnung sind gleiche bzw. einander entsprechende Teile stets mit denselben Bezugszeichen versehen, so dass sie in der Regel auch jeweils nur einmal beschrieben werden.

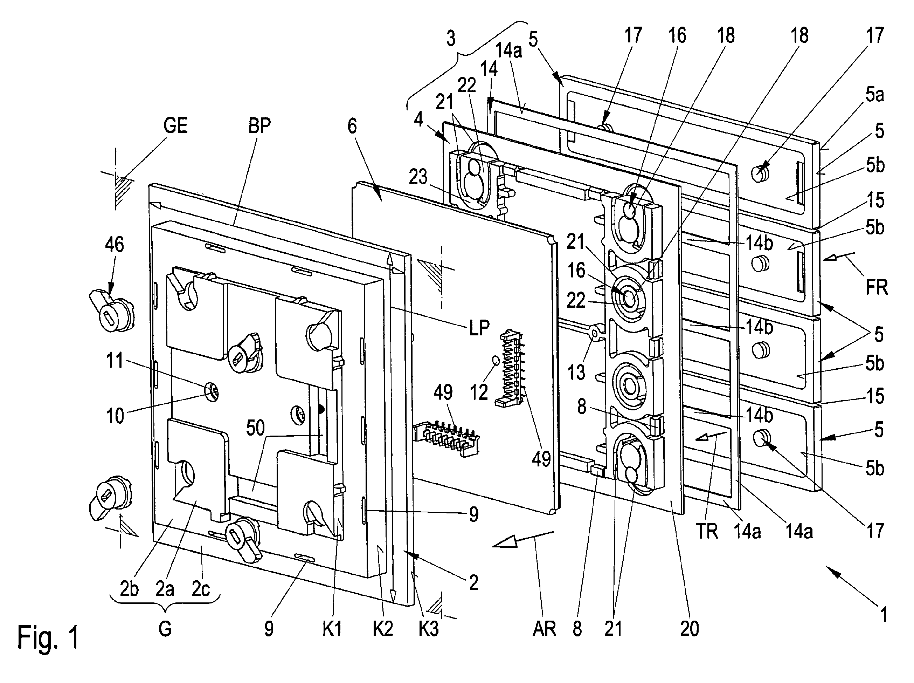

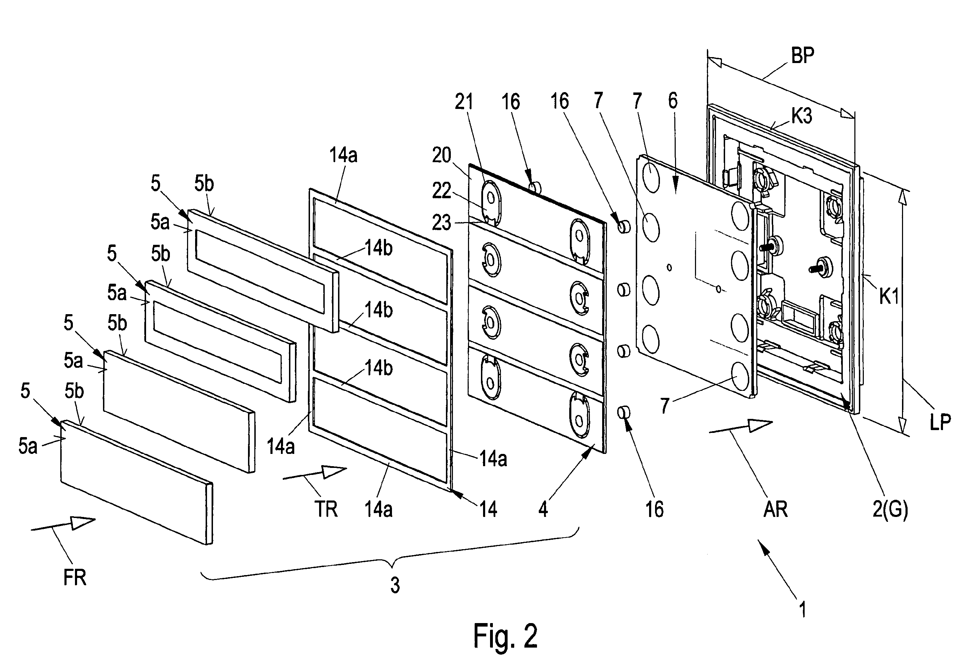

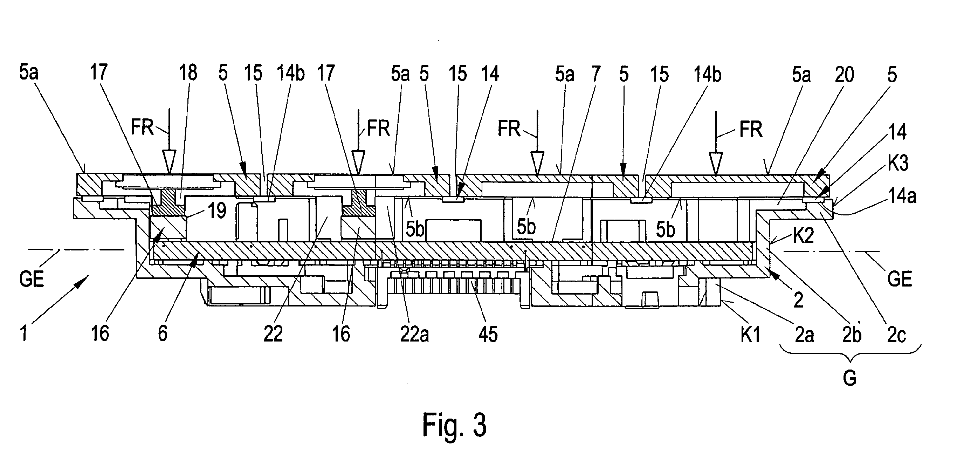

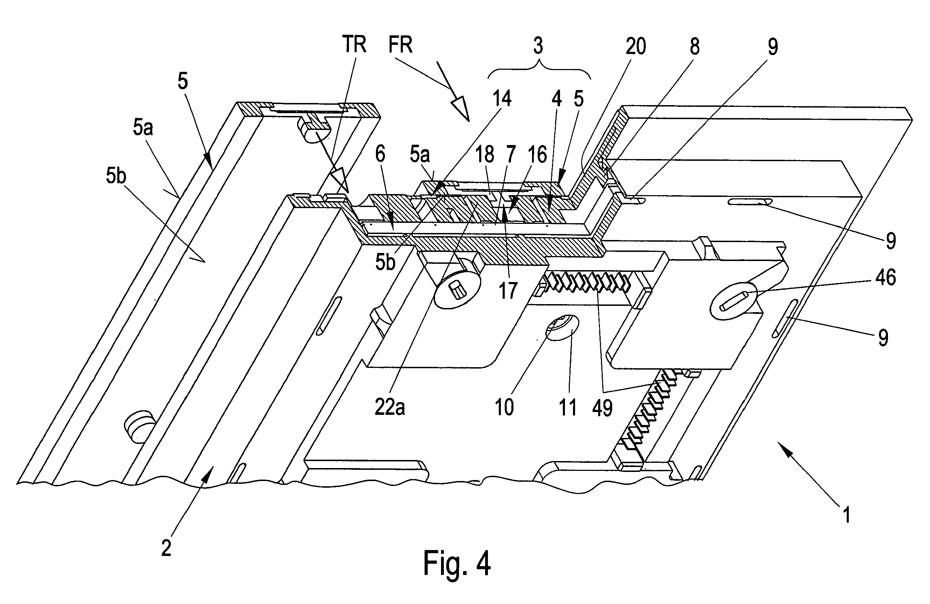

Wie sich zunächst aus Fig. 1 bis 4 ergibt, die Ausführungen eines erfindungsgemäßen Tastenmoduls 1 in seiner Gesamtheit - sowohl in der Summe seiner Einzelteile, als auch im Montagezustand - darstellen, umfasst ein erfindungsgemäßes Tastenmodul 1, das mit Vorteil insbesondere in modularen Systemen der Gebäudeelektroinstallation und Türkommunikation einsetzbar ist, ein Modulunterteil 2 und ein durch Montage in einer Aufsatzrichtung AR mit dem Modulunterteil 2 lösbar verbindbares (Fig. 1, 2) bzw. verbundenes (Fig. 3, 4) Moduloberteil 3.

In dem Moduloberteil 3 ist mindestens eine durch Druck in einer Funktionsrichtung FR betätigbare, dem Moduloberteil 3 zugehörige Taste 5 montierbar (Fig. 1, 2, 4) bzw. montiert (Fig. 3, 4), wobei das Moduloberteil 3 einen Tastenträger 4 umfasst, an dem die Tasten 5 durch eine Montage in einer Tastenmontagerichtung TR lösbar festlegbar (Fig. 1, 2, 4) bzw. festgelegt (Fig. 3, 4) sind. Dabei sind sowohl die Aufsatzrichtung AR des Moduloberteils 3, als auch die Tastenmontagerichtung TR und die Funktionsrichtung FR der Taste 5 identisch. Alle diese Richtungen AR, TR, FR stehen senkrecht auf einer Grundrissebene GE des Modulunterteils 2, die in Fig. 1 durch die strichpunktiert dargestellten, sich in schraffiert dargestellten Eckbereichen schneidenden Geraden dargestellt ist und dort sowie in Fig. 2 vertikal verläuft, während sie in Fig. 3 in der Horizontalen liegt.

In den in Fig. 1 bis 3 dargestellten Ausführungen sind jeweils vier Tasten 5, die jeweils eine Oberseite 5a und eine Unterseite 5b aufweisen, in zwei unterschiedlichen Ausführungen vorgesehen, auf die nachstehend noch im Detail eingegangen wird. Das entspricht einer bevorzugten Ausführung, wonach in der Tastenmontagerichtung TR an dem Tastenträger 4 - vorzugsweise unmittelbar nebeneinander - mehrere, vorzugsweise zwei bis vier, hinsichtlich ihrer Funktionsoberfläche gleich oder unterschiedlich ausgebildete Tasten 5 festgelegt sind.

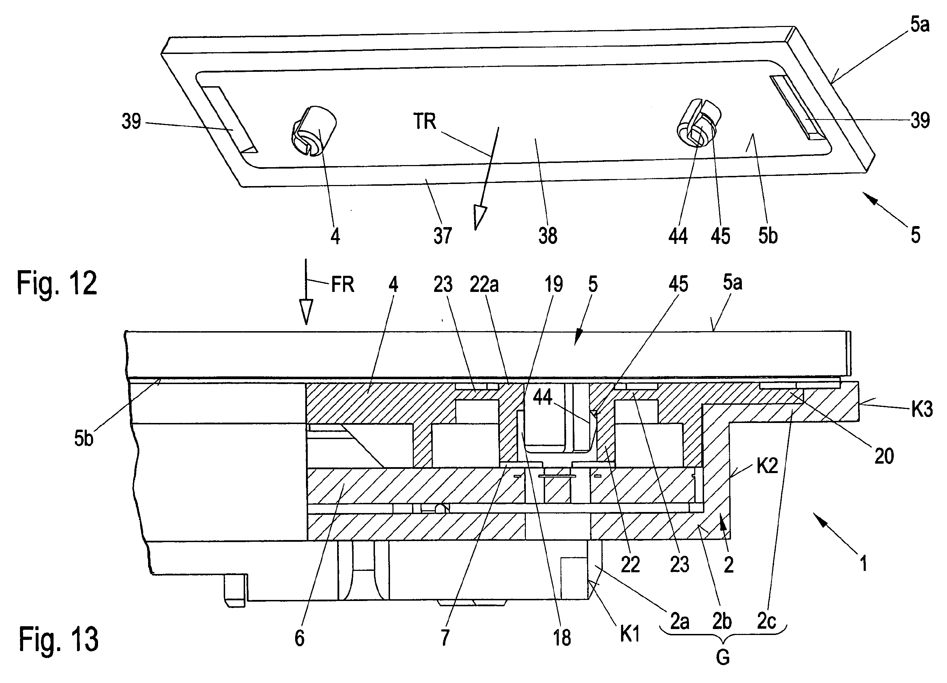

Zur Befestigung der Tasten 5 in der Tastenmontagerichtung TR an dem Tastenträger 4 werden, wie durch die Darstellungen in Fig. 1 bis 6 sowie 8 bis 11 veranschaulicht wird, Magnetverbindungen präferiert, jedoch kann die Befestigung auch auf eine andere geeignete Weise, z. B. über Rastverbindungen, vorgenommen werden, auf die sich Fig. 12 und 13 beziehen.

Das Modulunterteil 2 dient - wie dargestellt - zur Aufnahme eines Schaltungsträgers 6, auf dem sich eine elektronische Schaltung befindet. Die Schaltung enthält piezoelektrische Elemente 7 (siehe hierzu insbesondere Fig. 2 und 4), mittels derer unter der Wirkung des in der Funktionsrichtung FR auf die Taste 5 ausgeübten Druckes ein Schaltvorgang ausgelöst wird. Die piezoelektrischen Elemente 7, deren Aufbau dem Fachmann an sich bekannt ist, können bevorzugt aus einer piezoelektrischen Folie und/oder aus einer piezoelektrischen Druckschicht gebildet sein. Jeder Taste 5 können bevorzugt, wie dies insbesondere zunächst aus Fig. 2 hervorgeht, zumindest zwei piezoelektrische Elemente 7 zugeordnet sein, die sich im Montagezustand in einem Bereich unter den Tastenenden befinden.

Zur Montage des erfindungsgemäßen Tastenmoduls 1 kann das Moduloberteil 3 durch Aufsetzen in der Aufsatzrichtung AR mit dem Modulunterteil 2 unter Zwischenlage des Schaltungsträgers 6 verrastet und gegebenenfalls zusätzlich verschraubt werden. Zur Verrastung sind in den Ausführungen exemplarisch Rasthaken 8 an den unteren seitlichen Rändern des Tastenträgers 4 des Moduloberteils 3 sowie komplementäre Rastschlitze 9 am Modulunterteil 2 vorgesehen. Zur zusätzlichen Verschraubung des Modulunterteils 2 mit dem Tastenträger 4 sind exemplarisch Schrauben 10 vorgesehen, die in Schrauböffnungen 11 im Boden des Modulunterteils 2 eingesetzt werden können, im Montagezustand eine Durchtrittsöffnung 12 des Schaltungsträgers 6 durchgreifen und in unterseitigen Schraubenaufnahmen 13 des Tastenträgers 4 durch Eindrehen fixierbar sind. Dies ist insbesondere Fig. 1 und teilweise auch Fig. 4 zu entnehmen.

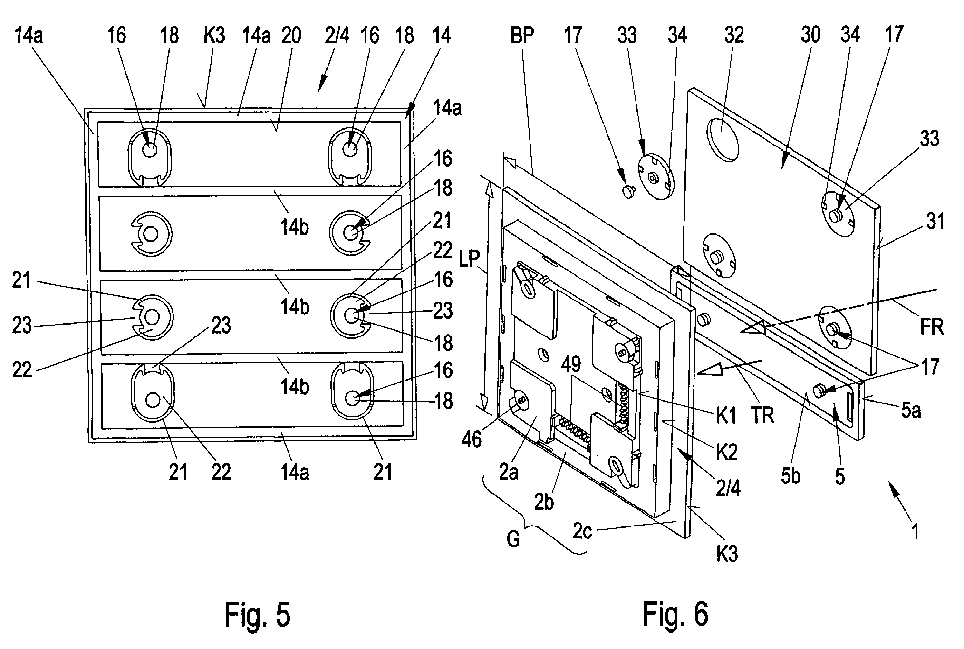

Ein Modulunterteil 2 und ein Tastenträger 4 des erfindungsgemäßen Tastenmoduls 1 können somit vorteilhafterweise jeweils als eine Vormontageeinheit gefertigt werden, in die bei einer Endmontage je nach Anwendungsfall Tasten 5 separat in der Tastenmontagerichtung TR senkrecht zur Erstreckungsebene GE des Modulunterteils 2 eingesetzt bzw. zur Demontage oder für einen Austausch gegen andere Tasten 5 separat wieder entnommen werden können. Fig. 5 und 6 zeigen derartige Vormontageeinheiten, die jeweils auch Funktionsplattform genannt werden können und mit der Bezugszeichenkombination "2/4" bezeichnet sind. Fig. 5 zeigt dabei eine Draufsicht auf die Vorderseite, und Fig. 6 eine perspektivische Ansicht von hinten.

Die Erfindung gestattet also einerseits die universelle Verwendung von jeweils gleichartig ausgebildeten, universal für verschiedene Tasten- und andere Funktionsmodule einsetzbaren Modulunterteilen 2, und andererseits die universelle Verwendung von jeweils gleichartig ausgebildeten, universal für verschiedene Tastenausführungen einsetzbaren Vormontageeinheiten 2/4.

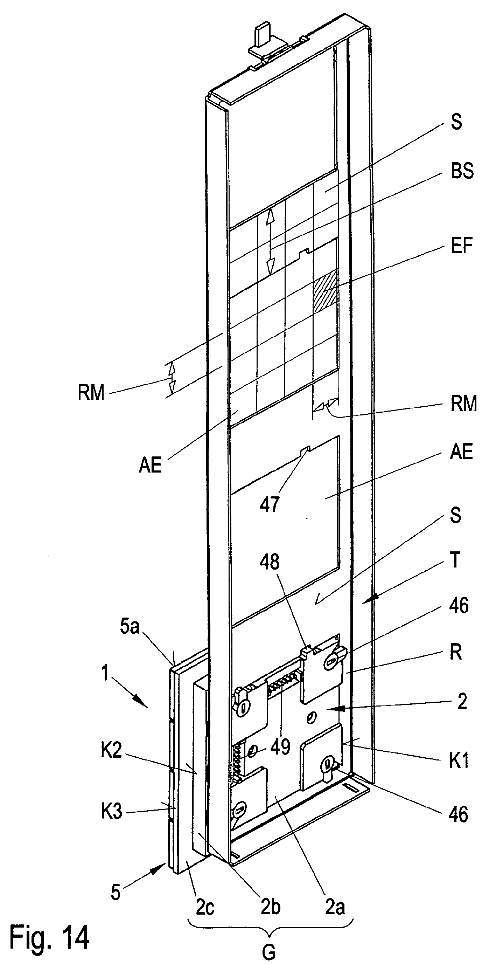

Ein Grundkörper G des Modulunterteils 2 kann dabei ein von der Grundgestalt her quaderförmiges erstes Teil 2a umfassen, das insbesondere formangepasst in Ausnehmungen AE eines Trägers T eines modularen Montagesystems einpassbar ist, wie dies in Fig. 14 dargestellt ist. Dieses erste Teil 2a kann dabei eine erste rechteckige Seitenbegrenzungskontur K1 aufweisen, wobei insbesondere die jeweilige Länge und/oder die jeweilige Breite dieser ersten Kontur K1 als ganzzahliges Produkt eines Rastermaßes RM dimensioniert ist.

Das Rastermaß RM kann durch ein Raster mit aus quadratischen Einheitsflächen EF gebildeten Teilflächen vorgegeben sein, wie dies für die zweite Öffnung AE von oben in Fig. 14 und einen daneben liegenden Steg S des Trägers T gezeigt ist, wobei die Länge der jeweiligen Grundseite der Einheitsfläche EF das Rastermaß RM bildet. Vorzugsweise kann dabei die Seitenkantenlänge jeder Teilfläche einem modulspezifischem Rastermaß RM entsprechen, das 17,75 mm beträgt, wobei das Raster in der Öffnung AE sechzehn gleich große quadratische Teilflächen enthält.

Die Länge und Breite der ersten, insbesondere quadratisch ausgebildeten Kontur K1 kann dabei jeweils bevorzugt - wie auch die der Kontur der Öffnung AE - dem vierfachen Rastermaß RM entsprechen, im vorstehend genannten bevorzugten Fall also 71 mm. Die Breite BS des Steges beträgt das Doppelte des Rastermaßes RM, also 35,5 mm.

Des Weiteren kann - wie gezeigt - vorgesehen sein, dass der Grundkörper G ein von der Grundgestalt her quaderförmiges zweites Teil 2b umfasst, welches eine zweite, größere rechteckige Seitenbegrenzungskontur K2 aufweist als das erste Teil 2a und im Montagezustand Stege S des Systemträgers T zwischen den Ausnehmungen AE und/oder Ränder R des Trägers 2 an den Ausnehmungen AE ganz oder teilweise abdeckt, wobei auch hier insbesondere die jeweilige Länge und/oder die jeweilige Breite der zweiten Kontur K2 als ganzzahliges Produkt des Rastermaßes RM dimensioniert sind. Die Länge und Breite der zweiten, ebenfalls insbesondere quadratisch ausgebildeten Kontur K2 können dabei bevorzugt dem fünffachen Rastermaß RM entsprechen.

Schließlich kann der Grundkörper G ein von der Grundgestalt her quaderförmiges, insbesondere dünner als das zweite Teil 2b ausgeführtes, drittes Teil 2c umfassen, welches eine dritte, größere rechteckige Seitenbegrenzungskontur K3 aufweist als das zweite Teil 2b und das erste Teil 2a, wobei insbesondere die jeweilige Länge LP und/oder die jeweilige Breite BP der dritten Kontur K3 als ganzzahliges Produkt des Rastermaßes RM dimensioniert ist, wobei dieses im bevorzugten Fall 106,5 mm betragen kann, wobei es dem sechsfachen Rastermaß entspricht und damit bevorzugt gleichzeitig die Breite von vier in einem Tastenmodul 1 nebeneinander liegenden Tasten 5 inklusive von zwischen ihnen liegenden Spalten 15 aufweist. Das dritte Teil 3c kann dabei oberflächenbündig den Umriss einer ebenen Oberplatte 20 umranden, die das Trägerteil 4 aufweist, wie insbesondere Fig. 1 zeigt, wobei die Oberplatte 20 im Montagezustand auf dem zweiten Teil 2b aufliegt.

Auf der Oberfläche des Tastenträgers 4 kann mit Vorteil ein formangepasstes Dichtungsteil 14 unter den Tasten 5 angeordnet werden. Wie gezeigt, kann das Dichtungsteil 14 bevorzugt aus gitterartig angeordneten, senkrecht und parallel zueinander verlaufenden Randstegen 14a und Zwischenstegen 14b gebildet sein. Die Zwischenstege 14b können dabei bevorzugt derart angeordnet und bemessen sein, dass sie im Montagezustand jeweils dichtend für zwei nebeneinander liegende Tasten 5 wirken, indem sie einen Spalt 15 zwischen den Tasten 5 verschließen, wie dies insbesondere durch Fig. 3 veranschaulicht wird.

Was die Ausbildung des Trägerteils 4 betrifft, so kann dieses im Hinblick auf die verschiedenen Funktionen, die es erfüllt, eine spezielle Konstruktion aufweisen. Die Hauptfunktion des Trägerteils 4 besteht dabei in einer stabilen Aufnahme, Befestigung und Halterung der Tasten 5. Die Erfüllung dieser Hauptfunktion muss jedoch auf eine Art und Weise erfolgen, die gewährleistet, dass unter der Wirkung des in der Funktionsrichtung FR auf eine Taste 5 ausgeübten Druckes der Schaltvorgang in den unter dem Tastenträger 4 auf dem Schaltungsträger 6 angeordneten piezoelektrischen Elementen 7 ausgelöst wird. Insofern die Taste 5 dabei nicht unmittelbar auf die piezoelektrischen Elemente 7 einwirkt, hat das Trägerteil 4 somit als weitere Funktion auch die der Kraftübertragung von der Taste 4 auf die piezolektrischen Elemente 7 zu erfüllen.

Die spezifischen konstruktiven Details, die das Trägerteil 4 zur Erfüllung dieser Funktionen aufweisen kann, werden nachstehend - insbesondere unter Bezugnahme auf Fig. 1, 3, 4 und 5 - beschrieben.

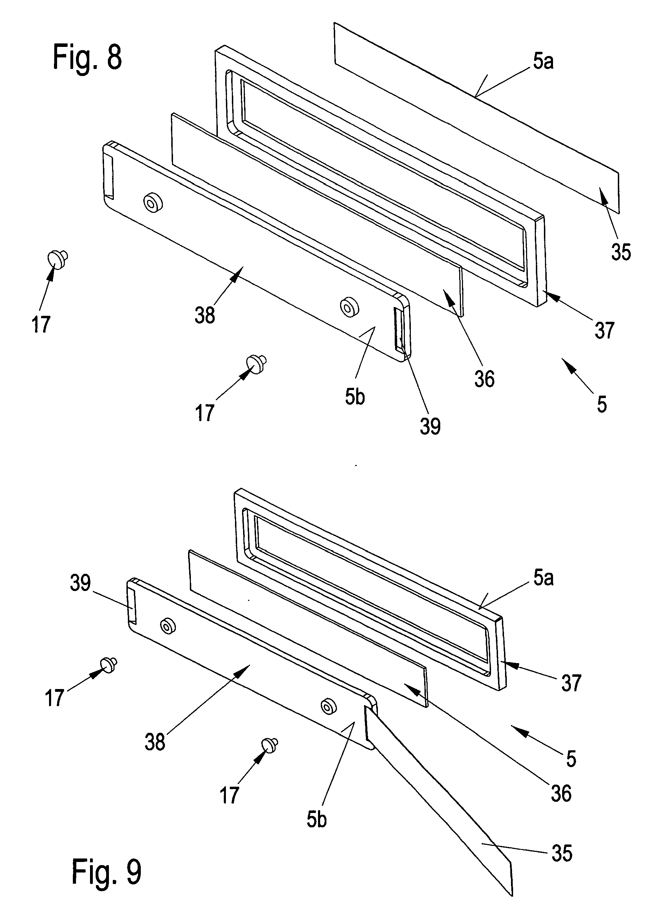

Wie bereits erwähnt, besteht eine bevorzugte Verbindungsart zwischen den Tasten 5 und dem Tastenträger 4 in der Ausbildung einer Magnetverbindung. Zu diesem Zweck können in dem Tastenträger 4 - insbesondere formschlüssig, aber auch beispielsweise stoffschlüssig, wie durch ein zusätzliches Verkleben - Permanentmagnete 16 eingebettet sein. Außer aus den vorstehend genannten Figuren sind derartige Magnete 16 als Einzelteile auch Fig. 2 sehr deutlich zu entnehmen. Als komplementäre Gegen-Verbindungselemente können mit Vorteil ferromagnetische Befestigungsmittel 17, wie die in Fig. 1, 3, 4 und 6, aber auch als Einzelteile in Fig. 8 bis 11 dargestellten Stahlniete oder -stifte, eingesetzt werden, die ihrerseits in den Tasten 5 befestigbar sind.

Zur Aufnahme der Magnete 16 und der ferromagnetischen Befestigungsmittel 17 können im Tastenträger 4 Durchbrüche 18 vorgesehen sein, wobei zur Veranschaulichung auf die in Fig. 3 ganz links dargestellte Schnittdarstellung verwiesen wird. Es ist dort zunächst zu sehen, dass die (nicht bezeichnete) Längsachse der Durchbrüche 18 durch die Tastenmontagerichtung TR festgelegt ist. Die Durchbrüche 18 wirken so bei der Montage der Tasten 5 als Führungen für deren ferromagnetische Befestigungsmittel 17. Des Weiteren weisen die Durchbrüche 18 eine innere Stufe 19 auf, die jeweils im Durchbruch einen Rand zur Auflage der insbesondere zylinderförmig ausgebildeten Magnete 16 bildet. Die Magnete 16 können so nur "von hinten", also entgegen der Tastenmontagerichtung TR, eingesetzt werden. Wenn die Magnetverbindung wieder gelöst werden soll, was vorteilhafterweise durch ein einfaches, senkrecht zur Grundrissebene GE erfolgendes Abziehen der Tasten 5 von dem Tastenträger 4 geschehen kann, werden die Magnete 16 an der inneren Stufe 19 festgehalten und können nicht aus dem Durchbruch 18 gezogen werden.

Was die konstruktive Gestaltung des Trägerteils 4 im Hinblick auf seine Funktion zur Kraftübertragung von der Taste 4 auf die piezoelektrischen Elemente 7 betrifft, so ist zunächst festzuhalten, dass das Trägerteil 4 die bereits erwähnte ebene Oberplatte 20 aufweist, wie Fig. 1 zeigt. Eine Aufsicht auf die Oberplatte 20 zeigt Fig. 5. Dort ist zu sehen, dass auf der Oberplatte 20 das Dichtungsteil 14 aufliegt. Eine Außenkontur der Oberplatte 20 ist dabei vorzugsweise formgleich und nur wenig kleiner als die oberste am Modulunterteil 2 ausgebildete Außenkontur K3, wobei das Trägerteil 4 unter Zwischenlage des Schaltungsträgers 6 mit dem Modulunterteil 2 verbindbar ist.

Des Weiteren zeigen Fig. 1 (von unten) und Fig. 5 (von oben), dass sich in der Oberplatte 20 des insbesondere aus Kunststoff bestehenden Tastenträgers 4 Freisparungen 21 befinden. Die Freisparungen 21 umranden rohrstückartige Strukturen 22, die nur noch über Stege 23 (Fig. 5) mit der Oberplatte 20 verbunden sind. In den rohrstückartigen Strukturen 22 befinden sich die Durchbrüche 18 für die Magnete 16. Mittels der Strukturen 22, auf deren Oberseite jeweils die Unterseite 5b der Tasten 5 zur Anlage kommt, erfolgt die Druckübertragung von den Tasten 5 auf die piezoelektrischen Elemente 7. Sie werden daher im Weiteren als Druckübertragungselemente 22 bezeichnet.

Unterseitig liegen die Druckübertragungselemente 22 mit ihrem gegenüber liegenden, der Oberplatte 20 abgewandten Ende auf den piezoelektrischen Elementen 7 auf.

Dadurch, dass die Druckübertragungselemente 22 oberseitig durch ihre Anbindung an die Oberplatte über die flexibel ausgebildeten Stege 23 relativ zur Oberplatte 20 leicht auslenkbar sind, und dadurch, dass die piezoelektrischen Schaltelemente 7 einen äußerst geringen Schaltweg benötigen, genügen vorteilhafterweise ein sehr geringer, in der Funktionsrichtung FR auf die Taste 5 ausgeübter Druck und nur eine geringfügige Tastenbewegung, um einen Schaltvorgang auszulösen. Die Tasten 5 wirken dabei mit ihrer Unterseite 5b auf die Oberseite der Druckübertragungselemente 22, wobei diese einen geringfügigen Überstand 22a (Fig. 2, 4, auch 13) gegenüber der übrigen Oberfläche der Oberplatte 20 aufweisen, der eine ausschließliche Einwirkung der Taste 5 auf diese Elemente 22 sichert. Mit anderen Worten liegt die Taste 5 nur in diesem überstehenden Bereich 22a auf dem darunter befindlichen Tastenträger 4 auf.

Die rohrstückförmigen Druckübertragungselemente 22 können bedarfsweise - im Hinblick auf den zur Verfügung stehenden Montageraum und auf eine einfache Montage einen kreisringförmigen Querschnitt aufweisen oder im Querschnitt auch von dieser Form abweichen. So ist insbesondere aus Fig. 1 und 5 zu entnehmen, dass die Außenkonturen der Druckübertragungselemente 22 für zwei außenliegende Tasten 5 jeweils oval ausgebildet sind, wobei die Stege 23 sich auf der innenliegenden Tastenseite befinden, während die Außenkonturen der Druckübertragungselemente 22 für zwei innenliegende Tasten 5 kreisförmig ausgebildet sind, wobei die Stege 23 sich auf der außenliegenden Seite befinden. Damit wird erreicht, dass - obwohl die Magnete 16, die von den äußeren Druckübertragungselementen 22 für die beiden außenliegenden Tasten 5 aufgenommen werden, sich näher am Rand des Tastenträgers 4 befinden, der form- und größenangepasst an die Kontur K2 des Modulunterteils 2 ist, als die Magnete 16, die von den inneren Druckübertragungselementen 22 für die beiden innenliegenden Tasten 5 aufgenommen werden, die sich weiter entfernt von der Kante des Tastenträgers 4 befinden - bei im späteren Betrieb funktionssicherer Bedienbarkeit eine einfache Montage möglich ist.

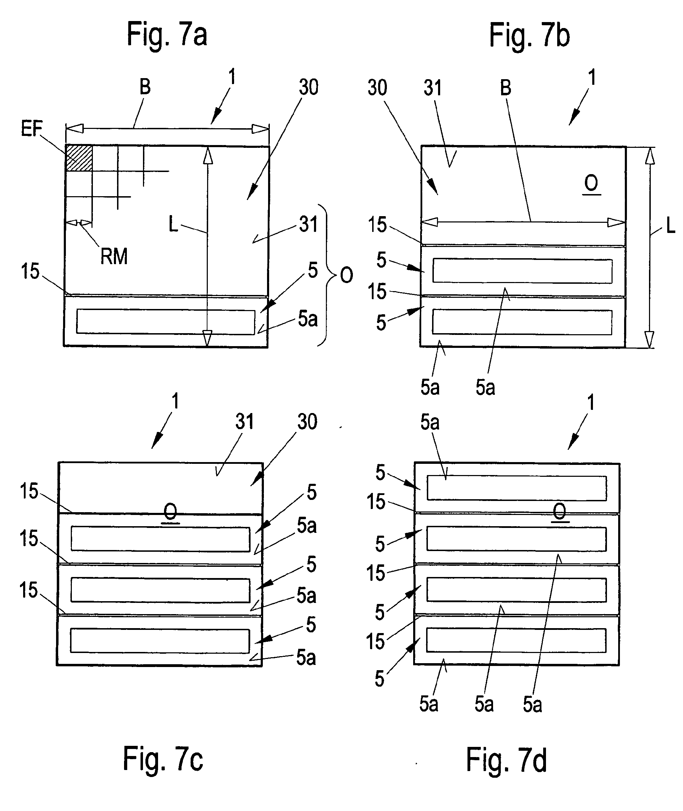

Die jeweils gleichartig ausgebildeten Vormontageeinheiten 2/4, sind mit Vorteil nicht nur mit verschiedenen Tastenausführungen universal einsetzbar, was nachfolgend noch unter Bezugnahme auf Fig. 8 bis 11 erläutert wird, sondern auch mit verschiedenen Anzahlen von Tasten 5. Hierauf beziehen sich Fig. 6 sowie Fig. 7a bis 7d.

Während in den in Fig. 1 bis 3 sowie Fig. 7d dargestellten Ausführungen jeweils vier Tasten 5 vorgesehen sind, zeigen Fig. 6 und 7a eine Bestückung der Vormontageeinheiten 2/4 mit nur jeweils einer Taste, Fig. 7b mit zwei Tasten 5 und Fig. 7c mit drei Tasten 5. Um im montierten Zustand eine rahmenlose, flächenbündig gestaltete Oberfläche des erfindungsgemäßen Tastenmoduls 1 zu erreichen, ist vorgesehen, dass in der Tastenmontagerichtung TR an den, ursprünglich jeweils zur Montage von ein bis vier Tasten 5 ausgebildeten Tastenträgern 4, mindestens ein Blindteil 30 montiert ist, insbesondere mit dem Tastenträger 4 über eine Magnetverbindung 16, 17 nach der Art, wie sie bei den Tasten 5 vorliegt, verbunden oder verrastet ist. Das Blindteil 30 ist dabei jeweils derart bemessen, dass es den Montageplatz von einer (Fig. 7c), zwei (Fig. 7b) oder drei (Fig. 6, Fig. 7a) Tasten 5 abdeckt.

Das Blindteil 30 ist derart ausgebildet, dass es bei einem Druck in der Funktionsrichtung FR auf seine Oberfläche 31 keinen Schaltvorgang auslöst. Um dies zu gewährleisten, weist das Blindteil 30 unterseitig Aufnahmeöffnungen 32 auf, in denen Einsätze 33 befestigbar sind, die als Halte- und Distanzstücke fungieren. In den Einsätzen 33 sitzen zunächst unterseitig die ferromagnetischen Befestigungsmittel 17, welche im Montagezustand in die Durchbrüche 18 der Druckübertragungselemente 22 eingreifen und mit den Magneten 16 zur Ausbildung der Magnetverbindungen zusammenwirken. Des Weiteren befinden sich an den Unterseiten der Einsätze 33 Distanzstege 34, die im Montagezustand rund um die Überstände 22a auf der Oberseite der Druckübertragungselemente 22 zu liegen kommen, so dass sie diese blockieren, indem sie zumindest eine Ebene mit den Druckübertragungselementen 22 bilden oder etwas darüber überstehen und so verhindern, dass auf nicht benötigte piezoelektrische Elemente 7 drückend eingewirkt werden kann.

Die Längen L und die Breiten B der aus den Oberseiten 5a der Tasten 5 und/oder der Oberfläche 31 des Blindteils 30 gebildeten insbesondere quadratischen Gesamtoberflächen O der erfindungsgemäßen Tastenmodule 1 können, wie exemplarisch in Fig. 7a gezeigt, ebenfalls mit Vorteil als jeweils das Vielfache des Rastermaßes RM bemessen sein. Bevorzugt kann das Vielfache dabei ein Sechsfaches sein, wobei sich Abmessungen von 106,5 mm ergeben.

In einem erfindungsgemäßen Tastenmodul 1 können die Tasten 5 bevorzugt als Beschriftungsträger ausgebildet sein, wobei als unterschiedliche Beschriftungskonzepte insbesondere Gravuren, das Einstecken von Schildern oder das Aufkleben von Folien möglich sind.

So zeigt Fig. 8 eine Taste 5, auf die von vorn ein Namensschild 35 aufklebbar ist, das als selbstklebende beschriftbare Folie 35 ausgebildet ist, wie sie unter der Bezeichnung Dymo(R) Folie bekannt und handelsüblich ist. Das Schild wird auf eine insbesondere aus Glas oder aus transparentem Kunststoff bestehende Tastenscheibe 36 aufgeklebt, welche durch einen Tastenrahmen 37 abgedeckt wird, der vorzugsweise aus Aluminium oder Edelstahl bestehen kann. Die Oberfläche der Tastenscheibe 36 ist gegenüber der des Tastenrahmens 37 zum Aufkleben der Folie entsprechend eingezogen bzw. um die Foliendicke gegenüber dem Rahmen 37 zurückgesetzt. Das Namensschild 35 kann mit Vorteil hinterleuchtet werden. Die Taste 5 weist ein plattenförmiges, insbesondere aus Kunststoff, vorzugsweise aus transparentem Kunstststoff, bestehendes Basisteil 38 auf, an dem unterseitig die Verbindungsmittel 17 für den Tastenträger 4 montierbar sind.

Auch bei der Tastenausführung gemäß Fig. 9 wird ein Namensschild 35 verwendet, das eine Folie sein kann, jedoch jeweils nicht klebend ausgeführt sein muss, da die Taste 5, insbesondere deren Basisteil 38, zur Aufnahme der Schildes 35 taschenartig ausgebildet ist. Das Schild 35 wird in die Taste 5 durch eine an der Rückseite 5b ausgebildete Einschuböffnung 39 des Basisteils 38 eingeschoben und kann hinterleuchtet werden. Auf das Basisteil 38 können - wie bei der Ausführung gemäß Fig. 8 - die transparente Tastenscheibe 36 und der Tastenrahmen 37 montiert werden.

Die Tastenausführungen gemäß Fig. 8 und 9 sind somit an sich identisch, wobei nur das jeweilige Namensschild 35 unterschiedlich ausgeführt ist und platziert wird. Derartige Tastenausführungen sind als die beiden oberen Tasten 5 in Fig. 1 und 2, links in Fig. 3, sowie in Fig. 4, 6 sowie Fig. 7a bis 7d gezeigt.

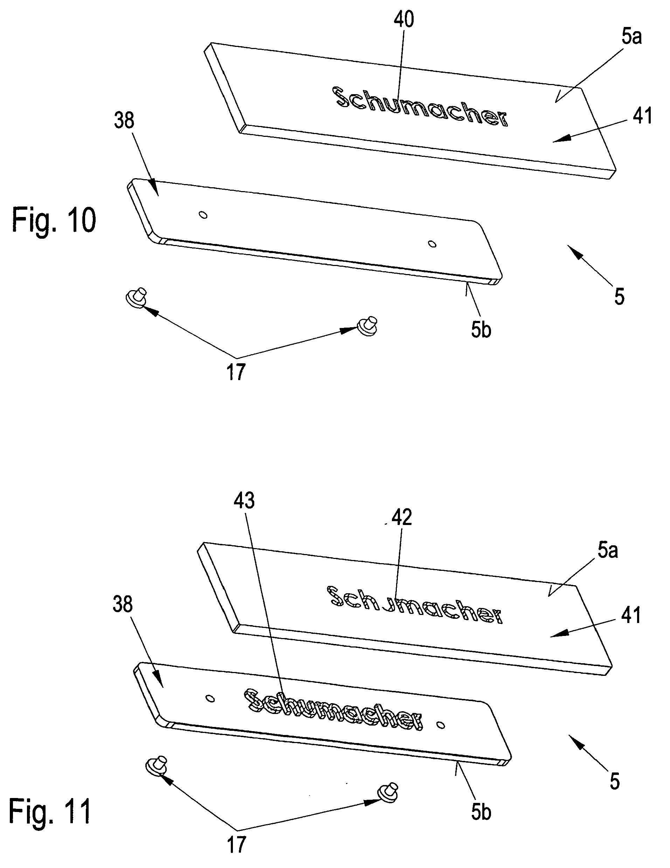

Fig. 10 zeigt die Ausführung einer Taste 5 mit einem Namenszug 40, der in ein metallisches, vorzugsweise aus Edelstahl oder eloxiertem Aluminium bestehendes Plattenteil 41 oberflächlich eingraviert ist. Das eingravierte Plattenteil 41, in dem der Namenszug 40 farbig ausgelegt sein kann, ist wiederum mit einem Kunststoff-Basisteil 38 verbindbar.

Der Unterschied der in Fig. 11 dargestellten Ausführung der Taste 5 gegenüber derjenigen in Fig. 10 besteht darin, dass der Namenszug 42 im Plattenteil 41 mit durchgehender Gravur ausgeführt ist. Auf dem darunter dargestellten, vorzugsweise für eine Durchleuchtung aus transparentem Kunststoff bestehenden Basisteil 38 befindet sich der gleiche Name als aufgesetzter Namenszug 43, der in den durchgravierten Namenszug 42 einfügbar ist.

Die Tastenausführungen gemäß Fig. 10 und 11 sind somit ebenfalls an sich identisch, wobei nur die Darstellung, insbesondere die Gravur, des jeweiligen Namenszugs 40, 42, 43 unterschiedlich ausgeführt ist. Derartige Tastenausführungen sind als die beiden unteren Tasten 5 in Fig. 1 und 2 und rechts in Fig. 3 gezeigt.

Fig. 12 und 13 beziehen sich auf die Ausführung einer Taste 5 eines erfindungsgemäßen Tastenmoduls 1 mit zu den Ausführungen in Fig. 1 bis 4 alternativer Befestigungsart. Anstelle der ferromagnetischen Befestigungsmittel 17, wie den vorzugsweise gezeigten Stahlnieten, sind hier als Verbindungsmittel an das Basisteil 38 angeformte Rastmittel 44, wie Rastzapfen, vorgesehen. Diese Rastmittel 44 können dabei vorzugsweise derart angeordnet und gestaltet sein, dass sie - wie in Fig. 13 gezeigt - mit den inneren Stufen 19 in den Durchbrüchen 18 der Druckübertragungselemente 22 kraftformschlüssig zusammenwirken. "Kraftformschlüssig" bedeutet dabei, dass eine der Unterseite 5b der Taste 5 zugewandte Schräge 45 unter einem derartigen Winkel zur Tastenmontagerichtung TR verläuft, dass, wenn die Rastverbindung wieder gelöst werden soll, dies vorteilhafterweise durch ein einfaches, senkrecht zur Grundrissebene GE entgegen der Tastenmontagerichtung TR erfolgendes Abziehen der Tasten 5 von dem Tastenträger 4 geschehen kann.

Fig. 14 zeigt eine Ausführung eines erfindungsgemäßen Tastenmoduls 1, das zur Herstellung eines modularen Montagesystems in einem Systemträger T montiert ist. Einzelheiten dazu, wie die bevorzugte Maßgestaltung nach dem Rastermaß RM, wurden schon vorstehend beschrieben. Es ist insbesondere zu sehen, dass die erste Kontur K1 des Grundkörpers G des Modulunterteils 2 eine an seinem Randbereich ausgebildete, umlaufende Anlagefläche für den Systemträger T bildet, so dass Träger T und Modulunterteil 2 nahezu spielfrei aneinander gefügt sind.

Zur Befestigung des erfindungsgemäßen Tastenmoduls 1 am Systemträger T ist vorgesehen, dass das erste Teil 2a des Modulunterteils 2 in seinen Eckbereichen derart schwenkbar gelagerte Fixierschieber 46 aufweist, dass diese in einer Öffnungsstellung innerhalb der Umrisskontur K1 des ersten Teils 2a des Modulunterteils 2 liegen und in einer dazu verdrehten Fixierstellung die Umrisskontur K1 einendig überragen und dabei den Steg S des Systemträgers T hinterfassen, so dass dieser zwischen dem zweiten Teil 2b des Modulunterteils 2 und den Fixierschiebern 46 verklemmt ist.

Die Erfindung ist nicht auf die beschriebenen Ausführungsbeispiele beschränkt, sondern umfasst auch alle im Sinne der Erfindung gleichwirkenden Ausführungen, wie dies bereits aus der vorstehenden Beschreibung hervorgeht. Auch kann der Fachmann zusätzliche technische Maßnahmen vorsehen, durch die die Erfindung in zweckmäßiger Weise ausgestaltet wird. Für die Tastenmodule 1 kann - dies ist insbesondere in Fig. 14 gezeigt - durch eine Codierung, beispielsweise durch entsprechende Freischnitte 47 im Systemträger T und korrespondierende Nasen 48 an der Unterseite des Moduls 1, eine ausschließlich lage- und funktionsrichtige Anordnung und eine Verdrehsicherheit der Module 1 im Systemträger T gewährleistet werden.

Der Schaltungsträger 6 kann einseitig zwei Mehrfachkontakte 49 für einen Anschluss einer Busleitung aufweisen, welche insbesondere derart elektrisch belegt sind, dass sie sowohl Eingangskontaktstellen als auch Ausgangskontaktstellen für eine elektrische Signalverarbeitung und eine Spannungsversorgung bilden, wobei die Mehrfachkontakte 49 über Öffnungen 50 (Fig. 1) im Modulunterteil 2 zugänglich sind.

### Bezugszeichen

- 1: Tastenmodul
- 2: Modulunterteil von 1
- 2a: erstes Teil von G
- 2b: zweites Teil von G
- 2c: drittes Teil von G
- 2/4: vormontierte Einheit aus 2 und 4
- 3: Moduloberteil von 1
- 4: Tastenträger für 5
- 5: Taste
- 5a: Oberseite von 5
- 5b: Unterseite von 5
- 6: Schaltungsträger
- 7: piezoelektrische Elemente von 6
- 8: Rasthaken an 4
- 9: Rastschlitz in 2
- 10: Schraube
- 11: Schrauböffnung für 10 in 2
- 12: Durchtrittsöffnung für 10 in 6
- 13: Schraubenaufnahme für 10 in 4
- 14: Dichtungsteil auf 4 unter 5
- 14a: Randsteg von 14
- 14b: Zwischensteg von 14
- 15: Spalt zwischen 5 und 5
- 16: Permanentmagnet
- 17: ferromagnetisches Befestigungsmittel
- 18: Durchbruch in 4 bzw. 22
- 19: innere Stufe in 18
- 20: Oberplatte von 4
- 21: Freisparung in 4 bzw. 20
- 22: Druckübertragungselement
- 22a: Überstand von 22 über 20
- 23: Steg zwischen 20 und 22

- 30: Blindteil auf 4, alternativ zu 5
- 31: Oberfläche von 30
- 32: Aufnahmeöffnung in 30 für 33
- 33: Einsatz für 32
- 34: Distanzsteg an 33
- 35: Namensschild für 5
- 36: Tastenscheibe von 5
- 37: Tastenrahmen von 5
- 38: Basisteil von 5
- 39: Einschuböffnung von 5 bzw. 38 für 35
- 40: Namenszug, eingraviert in 41
- 41: Plattenteil von 5
- 42: Namenszug, durchgraviert durch 41
- 43: Namenszug, aufgesetzt auf 38
- 44: Rastmittel an 5, alternativ zu 17
- 45: Schräge an 44
- 46: Fixierschieber an 20
- 47: Freischnitt in T (Codierung)
- 48: Nase an 20 (Codierung)
- 49: Mehrfachkontakt an 6
- 50: Öffnung für 49 in 20

- AE: Ausnehmung in T
- AR: Aufsatzrichtung von 3 auf 2
- B: Breite von O
- BS: Breite von S
- BP: Breite von 3c
- EF: (Raster-)Einheitsfläche
- FR: Funktionsrichtung von 5
- G: Grundkörper von 2
- GE: Grundrissebene von 2
- LP: Länge von 3c
- K1: Seitenbegrenzungskontur von 2a
- K2: Seitenbegrenzungskontur von 2b
- K3: Seitenbegrenzungskontur von 2c
- L: Länge von O
- O: Gesamtoberfläche aus 5a und 31 (Fig. 7a bis 7d)
- RM: Rastermaß
- S: Steg in T zwischen AE
- T: Systemträger für 1
- TR: Tastenmontagerichtung von 5 an 4

## Patentansprüche

1. Tastenmodul (1), insbesondere für modulare Systeme der Gebäudeelektroinstallation und Türkommunikation, umfassend ein Modulunterteil (2) und ein durch Montage in einer Aufsatzrichtung (AR) mit dem Modulunterteil (2) lösbar verbundenes Moduloberteil (3), wobei in dem Moduloberteil (3) mindestens eine durch Druck in einer Funktionsrichtung (FR) betätigbare Taste (5) montiert ist, wobei das Moduloberteil (3) einen Tastenträger (4) umfasst, an dem die mindestens eine Taste (5) durch eine Montage in einer Tastenmontagerichtung (TR) lösbar festgelegt ist, wobei sowohl die Aufsatzrichtung (AR) des Moduloberteils (3), als auch die Tastenmontagerichtung (TR) und die Funktionsrichtung (FR) der Taste (5) identisch sind und senkrecht auf einer Grundrissebene (G) des Modulunterteils (2) stehen, und wobei in dem Modulunterteil (2) ein Schaltungsträger (6) mit einer elektronischen Schaltung aufgenommen ist,
**dadurch gekennzeichnet, dass** die elektronische Schaltung piezoelektrische Elemente enthält, mittels derer unter der Wirkung des in der Funktionsrichtung (FR) auf die Taste (5) ausgeübten Druckes ein Schaltvorgang ausgelöst wird, wobei die Taste (5) über eine Magnetverbindung oder über eine Rastverbindung mit dem Tastenträger (4) verbunden ist und wobei der Tastenträger (4) zur Druckübertragung von der Taste (5) auf die piezoelektrischen Elemente (7) Druckübertragungselemente (22) umfasst, die jeweils aus einer Oberplatte (20) des Tastenträgers (4) freigespart und über Stege (23) mit der Oberplatte (20) verbunden sind, wobei sie einen Überstand (22a) gegenüber der Oberfläche der Oberplatte (20) aufweisen, mit dem sie an einer Unterseite (5b) der jeweiligen Taste (5) anliegen, und wobei die Druckübertragungselemente (22) als rohrstückartige Strukturen ausgebildet sind, in denen sich Durchbrüche (18) zur Aufnahme von Verbindungsmitteln (17) zur Herstellung der Magnetverbindung oder der Rastverbindung befinden.

2. Tastenmodul (1) nach Anspruch 1,
**dadurch gekennzeichnet, dass** in der Tastenmontagerichtung (TR) an dem Tastenträger (4) - vorzugsweise unmittelbar nebeneinander - mehrere, vorzugsweise zwei bis vier, hinsichtlich ihrer Funktionsoberfläche gleich oder unterschiedlich ausgebildete Tasten (5) festgelegt sind.

3. Tastenmodul (1) nach Anspruch 1 oder 2,
**dadurch gekennzeichnet, dass** mehrere, vorzugsweise alle Tasten (5), eine kongruent ausgebildete Außenkontur und bevorzugt auch eine gleiche Tastenhöhe aufweisen.

4. Tastenmodul (1) nach einem der Ansprüche 1 bis 3,
**dadurch gekennzeichnet, dass** das Moduloberteil (3) durch Aufsetzen in der Aufsatzrichtung (AR) mit dem Modulunterteil (2) unter Zwischenlage des Schaltungsträgers (6) verrastet und gegebenenfalls zusätzlich verschraubt ist.

5. Tastenmodul (1) nach einem der Ansprüche 1 bis 4,
**dadurch gekennzeichnet, dass** jeder Taste (5) zumindest zwei piezoelektrische Elemente (7) zugeordnet sind, die sich im Montagezustand in einem Bereich unter den Tastenenden befinden.

6. Tastenmodul (1) nach einem der Ansprüche 1 bis 5,
**dadurch gekennzeichnet, dass** die piezoelektrischen Elemente (7) durch eine piezoelektrische Folie und/oder durch eine piezoelektrische Druckschicht gebildet sind.

7. Tastenmodul (1) nach einem der Ansprüche 1 bis 6,
**dadurch gekennzeichnet, dass** in der Tastenmontagerichtung (TR) an einem zur Montage von ein bis vier Tasten (5) ausgebildeten Tastenträger (4) mindestens ein Blindteil (30) montiert ist, insbesondere mit dem Tastenträger (4) über eine Magnetverbindung (16, 17) verbunden oder verrastet ist, welches derart bemessen ist, dass es auf dem Tastenträger (4) den Montageplatz von einer, zwei oder drei Tasten (5) abdeckt.

8. Tastenmodul (1) nach einem der Ansprüche 1 bis 7,
**dadurch gekennzeichnet, dass** auf der Oberfläche des Tastenträgers (4) ein formangepasstes Dichtungsteil (14) unter den Tasten (5) und/oder dem Blindteil (30) angeordnet ist.

9. Tastenmodul (1) nach einem der Ansprüche 1 bis 8,
**dadurch gekennzeichnet, dass** die Tasten (5) als Beschriftungsträger ausgebildet sind.

10. Tastenmodul (1) nach einem der Ansprüche 1 bis 9,
**dadurch gekennzeichnet, dass** die Tasten (5) ein plattenförmiges Basisteil (38) aufweisen, an dem Verbindungsmittel (17) für den Tastenträger (4) ausgebildet oder montierbar sind.

11. Tastenmodul (1) nach Anspruch 10,
**dadurch gekennzeichnet, dass** die Verbindungsmittel (17) an das Basisteil (38) angeformte Rastmittel (44), wie Rastzapfen, oder ferromagnetische Befestigungsmittel (17), wie Stahlniete, sind.

12. Tastenmodul (1) nach einem der Ansprüche 1 bis 11,
**dadurch gekennzeichnet, dass** ein oder mehrere Tasten (5), insbesondere dabei jeweils ein/das Basisteil (38) der Tasten (5) zur Aufnahme eines Namensschildes (35) taschenartig ausgebildet sind und/oder eine mit dem Namensschild (35) beklebbare Tastenscheibe (36) aufweisen.

13. Tastenmodul (1) nach einem der Ansprüche 1 bis 12,
**dadurch gekennzeichnet, dass** ein oder mehrere Tasten (5) ein, insbesondere metallisches, vorzugsweise aus Edelstahl oder eloxiertem Aluminium bestehendes, oberflächlich oder durchgehend gravierbares Plattenteil (41) aufweisen.

14. Tastenmodul (1) nach einem der Ansprüche 1 bis 13,
**dadurch gekennzeichnet, dass** ein oder mehrere Tasten (5) einen in der Tastenmontagerichtung (TR) aufsetzbaren Tastenrahmen (37) aufweisen.

15. Tastenmodul (1) nach einem der Ansprüche 1 bis 14,
**dadurch gekennzeichnet, dass** das Modulunterteil (2) zur Befestigung an einem Systemträger (16) in seinem Grundkörper (G) eine quaderförmige Gestalt mit zumindest einer rechteckigen, insbesondere quadratischen, Seitenbegrenzungskontur (K1, K2, K3) aufweist.

16. Tastenmodul (1) nach Anspruch 15,
**dadurch gekennzeichnet, dass** die Abmessungen von Seitenbegrenzungskonturen (K1, K2, K3) des Grundkörpers (G), insbesondere eines aus mehreren Teilen (2a, 2a, 2b) bestehenden Grundkörpers (G), als Vielfache eines Rastermaßes (RM) bemessen sind.

17. Tastenmodul (1) nach einem der Ansprüche 1 bis 16,
**dadurch gekennzeichnet, dass** eine Länge (L) und eine Breite (B) einer aus Oberseiten (5a) von Tasten (5) und/oder einer Oberfläche (31) eines Blindteils (30) gebildeten Gesamtoberfläche (O) des Tastenmoduls (1) als Vielfache eines Rastermaßes (RM) bemessen sind.

## Claims

1. Button module (1), in particular for modular systems of electrical installation technology for buildings and door communication, comprising a module lower part (2) and a module upper part (3) detachably connected to the module lower part (2) by mounting in an attachment direction (AR), at least one button (5) that can be actuated by pressure in a functional direction (FR) being mounted in the module upper part (3), the module upper part (3) comprising a button carrier (4), to which the at least one button (5) is detachably fixed by mounting in a button mounting direction (TR), both the attachment direction (AR) of the module upper part (3) and the button mounting direction (TR) and the functional direction (FR) of the button (5) being identical and perpendicular to a layout plane (G) of the module lower part (2), and a circuit carrier (6) having an electronic circuit being accommodated in the module lower part (2),
**characterized in that** the electronic circuit contains piezoelectric elements, by means of which a switching operation is triggered under the action of the pressure exerted on the button (5) in the functional direction (FR), wherein the button (5) is connected to the button carrier (4) via a magnetic connection or via a latching connection, and wherein, for the transmission of pressure from the button (5) to the piezoelectric elements (7), the button carrier (4) comprises pressure transmission elements (22) which are each cut out of an upper plate (20) of the button carrier (4) and are connected to the upper plate (20) via webs (23), wherein they have an overlap (22a) with respect to the surface of the upper plate (20), with which they bear on an underside (5b) of the respective button (5), and wherein the pressure transmission elements (22) are formed as structures like pieces of tube, in which there are apertures (18) to hold connecting means (17) for producing the magnetic connection or the latching connection.

2. Button module (1) according to Claim 1,
**characterized in that** in the button mounting direction (TR), a plurality of buttons (5), preferably two to four, which are formed identically or differently with regard to their functional surface, are fixed to the button carrier (4) - preferably immediately beside one another.

3. Button module (1) according to Claim 1 or 2,
**characterized in that** a plurality of buttons (5), preferably all, have a congruently formed outer contour and preferably also an identical button height.

4. Button module (1) according to one of Claims 1 to 3,
**characterized in that** the module upper part (3) is latched to the module lower part (2) with the interposition of the circuit carrier (6) by being put on in the attachment direction (AR) and, if appropriate, is additionally screwed on.

5. Button module (1) according to one of Claims 1 to 4,
**characterized in that** each button (5) is assigned at least two piezoelectric elements (7), which, when mounted, are located in an area under the button ends.

6. Button module (1) according to one of Claims 1 to 5,
**characterized in that** the piezoelectric elements (7) are formed by a piezoelectric film and/or by a piezoelectric pressure layer.

7. Button module (1) according to one of Claims 1 to 6,
**characterized in that** in the button mounting direction (TR), on a button carrier (4) designed for the mounting of one to four buttons (5), there is mounted at least one blanking part (30), in particular connected to the button carrier (4) via a magnetic connection (16, 17) or latched thereto, which is dimensioned in such a way that it covers the mounting space of one, two or three buttons (5) on the button carrier (4).

8. Button module (1) according to one of Claims 1 to 7,
**characterized in that** a sealing part (14) with a matching shape is arranged on the surface of the button carrier (4) under the buttons (5) and/or the blanking part (30).

9. Button module (1) according to one of Claims 1 to 8,
**characterized in that** the buttons (5) are formed as inscription carriers.

10. Button module (1) according to one of Claims 1 to 9,
**characterized in that** the buttons (5) have a plate-like base part (38), on which connecting means (17) for the button carrier (4) are formed or can be mounted.

11. Button module (1) according to Claim 10,
**characterized in that** the connecting means (17) are latching means (44) moulded onto the base part (38), such as latching pins, or ferromagnetic fixing means (17) such as steel rivets.

12. Button module (1) according to one of Claims 1 to 11,
**characterized in that** one or more buttons (5), in particular respectively one/the base part (38) of the buttons (5), is/are formed in the manner of a pocket to hold a nameplate (35) and/or have a button strip (36) that can be bonded to the nameplate (35).

13. Button module (1) according to one of Claims 1 to 12,
**characterized in that** one or more buttons (5) has/have a plate part (41) that is in particular metallic, preferably consisting of stainless steel or anodized aluminium, which can be surface-engraved or through-engraved.

14. Button module (1) according to one of Claims 1 to 13,
**characterized in that** one or more buttons (5) have a button frame (37) that can be attached in the button mounting direction (TR).

15. Button module (1) according to one of Claims 1 to 14,
**characterized in that** for fixing to a system carrier (16), the module lower part (2) has in its base (G) a box-like shape with at least one rectangular, in particular square, lateral bounding contour (K1, K2, K3).

16. Button module (1) according to Claim 15,
**characterized in that** the dimensions of the lateral bounding contours (K1, K2, K3) of the base (G), in particular a base (G) composed of a plurality of parts (2a, 2a, 2b), are dimensioned as multiples of a grid dimension (RM).

17. Button module (1) according to one of Claims 1 to 16,
**characterized in that** a length (L) and a width (B) of an overall surface (0) of the button module (1), formed from upper sides (5a) of buttons (5) and/or a surface (31) of a blanking part (30), are dimensioned as multiples of a grid dimension (RM).

## Revendications

1. Module à touches (1), notamment pour des systèmes modulaire de l'installation électrique de bâtiment et de communication de porte, comprenant une partie inférieure de module (2) et une partie supérieure de module (3) reliée de manière amovible à la partie inférieure de module (2) par montage dans un sens de pose (AR), au moins une touche (5) qui peut être actionnée par une pression dans un sens de fonctionnement (FR) étant montée dans la partie supérieure de module (3), la partie supérieure de module (3) comprenant un porte-touche (4) auquel est fixée l'au moins une touche (5) par un montage dans un sens de montage de touche (TR), le sens de pose (AR) de la partie supérieure de module (3) ainsi que le sens de montage de touche (TR) et le sens de fonctionnement (FR) de la touche (5) étant identiques et perpendiculaires à un plan horizontal (G) de la partie inférieure de module (2), et un porte-circuit (6) comportant un circuit électronique étant accueilli dans la partie inférieure de module (2),
**caractérisé en ce que** le circuit électronique contient des éléments piézoélectriques au moyen desquels une opération de commutation est déclenchée sous l'effet de la pression exercée sur la touche (5) dans le sens de fonctionnement (FR), la touche (5) étant reliée au porte-touche (4) par le biais d'une liaison magnétique ou par le biais d'une liaison à enclipser et le porte-touche (4) comprenant des éléments de transmission de pression (22) servant à la transmission de pression de la touche (5) aux éléments piézoélectriques (7), lesquels sont respectivement évidés dans une plaque supérieure (20) du porte-touche (4) et sont reliés à la plaque supérieure (20) par des éléments jointifs (23) et présentent un porte-à-faux (22a) par rapport à la surface de la plaque supérieure (20) avec lequel ils reposent sur le côté inférieur (5b) de la touche (5) correspondante, et les éléments de transmission de pression (22) étant réalisés sous la forme de structures de type bout de tube dans lesquelles se trouvent des traversées (18) destinées à accueillir des moyens de liaison (17) servant à établir la liaison magnétique ou la liaison à enclipser.

2. Module à touches (1) selon la revendication 1, **caractérisé en ce que** dans le sens de montage de touche (TR), plusieurs, de préférence deux à quatre, touches (5) de configurations différentes ou identiques du point de leur surface fonctionnelle sont fixées sur le porte-touche (4), de préférence directement les unes à côté des autres.

3. Module à touches (1) selon la revendication 1 ou 2, **caractérisé en ce que** plusieurs, de préférence toutes les touches (5) présentent un contour extérieur de configuration congruente et de préférence aussi une même hauteur de touche.

4. Module à touches (1) selon l'une des revendications 1 à 3, **caractérisé en ce que** la partie supérieure de module (3) est enclipsée et le cas échéant en plus vissée avec la partie inférieure de module (2) par pose dans le sens de pose (AR) en intercalant le porte-circuit (6).

5. Module à touches (1) selon l'une des revendications 1 à 4, **caractérisé en ce qu'**au moins deux éléments piézoélectriques (7) sont associés à chaque touche (5), lesquels se trouvent dans une zone sous les extrémités de touche à l'état monté.

6. Module à touches (1) selon l'une des revendications 1 à 5, **caractérisé en ce que** les éléments piézoélectriques (7) sont formés par un film piézoélectrique et/ou par une couche d'impression piézoélectrique.

7. Module à touches (1) selon l'une des revendications 1 à 6, **caractérisé en ce qu'**au moins une pièce borgne (30) est montée dans le sens de montage de touche (TR) sur un porte-touche (4) configuré pour le montage d'une à quatre touches (5), notamment reliée ou enclipsée avec le porte-touche (4) par le biais d'une liaison magnétique (16, 17), laquelle est dimensionnée de telle sorte qu'elle recouvre l'emplacement de montage d'une, deux ou trois touches (5) sur le porte-touche (4).

8. Module à touches (1) selon l'une des revendications 1 à 7, **caractérisé en ce que** sur la surface du porte-touche (4), une pièce d'étanchéité (14) est disposée sous les touches (5) et/ou la pièce borgne (30).

9. Module à touches (1) selon l'une des revendications 1 à 8, **caractérisé en ce que** les touches (5) sont réalisées sous la forme de supports de marquage.

10. Module à touches (1) selon l'une des revendications 1 à 9, **caractérisé en ce que** les touches (5) possèdent une pièce de base (38) en forme de plaque sur laquelle sont formés ou peuvent être montés des moyens de liaison (17) pour le porte-touche (4).

11. Module à touches (1) selon la revendication 10, **caractérisé en ce que** les moyens de liaison (17) sont des moyens d'enclipsage (44) façonnés sur la pièce de base (38), tels que des tenons d'enclipsage ou des moyens de fixation (17) ferromagnétiques.

12. Module à touches (1) selon l'une des revendications 1 à 11, **caractérisé en ce qu'**une ou plusieurs touches (5), notamment ici respectivement une/la pièce de base (38) des touches (5), sont configurées en forme de poche pour accueillir une plaquette nominative (35) et/ou possèdent une plaque de touche (36) qui peut être collée avec la plaquette nominative (35).

13. Module à touches (1) selon l'une des revendications 1 à 12, **caractérisé en ce qu'**une ou plusieurs touches (5) possèdent une partie formant plateau (41) notamment métallique, de préférence en acier inoxydable ou en aluminium anodisé, qui peut être gravée en surface ou de manière ininterrompue.

14. Module à touches (1) selon l'une des revendications 1 à 13, **caractérisé en ce qu'**une ou plusieurs touches (5) possèdent un cadre de touche (37) qui peut être monté dans le sens de montage de touche (TR).

15. Module à touches (1) selon l'une des revendications 1 à 14, **caractérisé en ce que** la partie inférieure de module (2), en vue d'une fixation à un support de système (16), possède dans son corps de base (G) une structure de forme parallélépipédique ayant un contour de délimitation latérale (K1, K2, K3) rectangulaire, notamment carré.

16. Module à touches (1) selon la revendication 15, **caractérisé en ce que** les contours de délimitation latérale (K1, K2, K3) du corps de base (G), notamment un corps de base (G) constitué de plusieurs parties (2a, 2a, 2b), sont dimensionnés en tant que multiples d'une cote de grille (RM).

17. Module à touches (1) selon l'une des revendications 1 à 16, **caractérisé en ce qu'**une longueur (L) et une largeur (B) d'une surface totale (O) du module à touches (1), formé par les côtés supérieurs (5a) des touches (5) et/ou une surface (31) d'une pièce borgne (30), sont dimensionnées en tant que multiples d'une cote de grille (RM).
